Europäisches Patentamt

European Patent Office

Office européen des brevets

(11) Publication number: **0 487 789 A1**

# EUROPEAN PATENT APPLICATION

(21) Application number: **90203152.5**

(22) Date of filing: **29.11.90**

(51) Int. Cl.5: **A22C 25/00**

(43) Date of publication of application:
**03.06.92 Bulletin 92/23**

(84) Designated Contracting States:
**BE DE DK ES FR GB NL**

(71) Applicant: **MARELEC B.V.B.A.**
**Albert I laan 72**
**B-8620 Nieuwpoort(BE)**

(72) Inventor: **Rommelaere, Marcel**
**Albert I Laan 72**
**B-8620 Nieuwpoort(BE)**

(74) Representative: **Dopchie, Jean-Marc**
**KORTRIJKS OCTROOI- EN MERKENBUREAU**
**BVBA - K.O.B. Kennedypark 21c**
**B-8500 Kortrijk(BE)**

(54) **Installation for fast ejection of fish from a conveyor of a fish processing unit.**

(57) Removal unit for fast, selective ejection of fishes from a conveyor; consisting of a serie of removal mechanisms installed along a conveyor belt, and by which each mechanism is activated at the right moment by a selection unit, and by which the translation movement of the conveyor belt is utilized to eject the fish from the belt; with the characteristic that each removal mechanism comprises a flap (5) which, when activated for removal of the fish, is positioned so that it forms an inclined plane with an angle ($\alpha$) upwards on the belt (1), and when not activated, leaves a free height (h) between the flap (5) and the belt (1).

FIG. 1

The present invention refers to a removal unit, for round-or flatfishes, situated at the end of a fish assorting system or fish processing unit.

In particular a removal unit, which has as function : to remove selectively different kinds of fishes from a conveyor belt, in order to collect the fishes; corresponding to identical selective requirements; in different collecting units. These collecting units may be for example conveyor belts or fishbaskets. The mentionned selective requirements may comprise i.e. the weight, size and kind of fish.

The specific selection unit; which decides to which collecting unit each kind of fish belongs, following the entered selective requirements; does not belong to the framework of this patent.

In order to be able to remove selectively each fish, the fishes are presented to the removal unit one by one. This means the fishes are placed, manually or automatically on the conveyor belt accordingly well known methods, one behind the other, with a certain intermediate distance.

More specifically the present invention refers to a removal unit working on the principle by which the kinetic energy of the moving fish is utilized for quick ejection from the conveyor belt.

The mentionned removal unit consists of a serie of removal mechanisms installed following the length axis of the conveyor belt. Each removal mechanism belongs to one collecting unit.

The selection unit now activates a specific removal mechanism just at the moment the fish arrives at the position of this mechanism with the result that the fish arrives in the selected collecting unit.

Different such units, working on one non-interrupted conveyor belt, which have the function to remove fishes selectively from this belt already exist.

All these units are based on the principle of removing the fish form the belt sideways, on the same or lower horizontal level. This is accomplished by means of a rotative or vertically moving rectangular flap, eventually divided in different sections, which in closed position, is installed more or less vertically and is touching with the underedge the belt and is lengthwise positioned oblique towards the translation movement of the conveyor belt. The fish strikes against this flap and follows now through his kinetic energy the surface of this flap. This means it changes from direction and escapes from the belt sideways.

The working principle of these units has important disadvantages, especially when applied for fast ejection of the fishes. Indeed, at high speed the fish will bump very hard against the flap surface which results in damages, especially with the bigger fishes. Through this bump the fish will loose a greater part of his kinetic energy, with the result of loss in speed, so longer time to remove the fish from the belt. As the ejection speed form the belt will still be relatively high, further precautions must be made in order to prevent further damages.

The present invention has as goal to eliminate all these disadvantages in order to increase the removal speed considerably, and so doing increase the production capacity of the complete fish assorting system, or fish processing unit. This goal is achieved, following one claim of this invention, by the realisation of the removal mechanism with a rectangular flap, which in closed position touches with one edge the suface of the belt and is forming an inclined plane rising from the contact edge with an angle ($\alpha$), following the direction of the belt movement.

This angle ($\alpha$) is choosen so, that the fishes are brought to a higher level, by means of their kinetic energy without any bumping.

Following a second claim of the invention, the removal mechanism further consists of a cross conveyor belt which links-up with the higher level of the removal flap.

This conveyor belt, with rough surface, stops the translation movement of the fish and conducts the fish slowly and sideways, towards the collecting unit.

Through this method, the fishes are removed without any hard treatment, this in contradiction with the above mentionned existing systems.

In order to explain clearly how the goal of this invention is achieved, following figures are provided; which are related to one possible example of execution. All other possibilities of execution corresponding to the specified claims also belong to the framework of this invention.

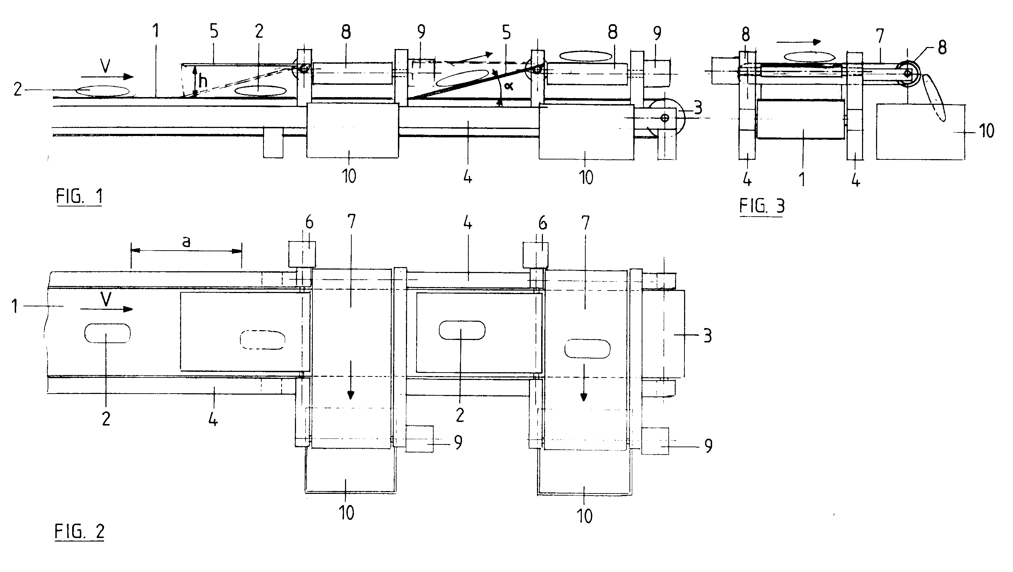

The figures 1, 2 and 3 respectively give the front sight, top sight and side sight of a conveyor with a selective removal unit executed following the characteristical claims of this invention. The fish assorting system or fish processing unit (not represented) comprises a removal conveyor belt (1) of which only the end is represented.

This conveyor transports the different fishes (2) with a certain intermediate distance (a) situated on this belt (1). The belt (1) moves at a constant velocity (V).

At the end, this belt is guided over a reversing roller (3). The conveyor is further completed by the frame (4). At the top of the belt (1), different removal mechanisms are installed in series, of which, for simplicity reasons, only two units are drawn.

Each removal mechanism consists of one flap (5) which can rotate around a horizontal shaft or can make a vertical translation movement, and which i.e. is driven by a cylinder or an angular motor (6). This angular motor (6) has two end positions. One the one side a position where the flap (5) is closed and forms an inclining plane which forms an angle (α) on the belt (1) and on the other side is lifted more or less horizontally so that the fishes can pass freely underneath the flap (5). Further is foreseen a cross conveyor consisting of a horizontal conveyor (7) installed transverse over the conveyor belt (1). This conveyor (7) comprises two rollers (8) of which one roller is driven by a motor (9), at a low constant speed. From this conveyor (7), the fishes are guided into a collecting basket (10).

One characteristical claim of the invention relates to the flap (5) which, for the removal of the fish, is installed so that it forms an inclined plane with angle (α) and touches with his loweredge the surface of the belt (1). The angle (α) is choosen so that the fishes are transported on the flap (5) towards the higher level of the conveyor belt (7); due to the initial kinetec energy of the fish moving at the velocity (V) of the conveyor belt (1). The transportation of the fish on the flap (5) is realised without any chocks, while the fish remains in his natural form. Due to the absence of chocks, the kinetic energy is not disturbed and the fish moves with his maximum possible velocity upwards on the flap (5).

In order to keep this velocity as high as possible the surface of the flap (5) is constructed for minimum friction losses.

Once on the higher level of the belt (7), the fish moves on the rough surface of this belt, so braking to zero speed. Now the fish is moved slowly in transverse direction by the band (7) until it arrives in the collecting basket (10). The belt (7) can also be replaced by inclined plane towards the collecting basket (10).

The selection unit, which controls which fish in which collecting basket (10) arrives, gives an activation signal to the corresponding angular motor (6) in order to close the flap (5) just at the moment that the fish arrives at the lower edge of this flap (5). In the non-active position all flaps (5) are in a horizontal position so that a height (h) underneath each flap assures that the fish on the belt (1) can pass freely, when it has not to be removed.

Because the height (h) is relatively small, the flaps (5) only have to make a small movement which assures a very fast opening and closing movement. This is not the case with the classical sideways removing systems, where the flaps must make a movement at least equal to the breadth of the conveyor belt (1) which is several times the height (h). An other existing sideways moving system comprises the same flap system subdivided in different parts which are closed sequentially. This construction also has a fast opening and closing movement especially when the flaps are opened vertically. However this construction is much more complicated both in realisation and controls than the object of the present invention. In any case all sideways moving systems realise the removal with relatively hard bumps, with the result that removal is much slower and with damages at the fishes.

As a general conclusion, the characteristical claims of the present invention create the possibility to remove fishes from a conveyor belt much quicker whithout any damages. With the result, that the velocity (V) of the conveyor belt (1) may be high, without any problems; by which the intermediate distances (a) between two fishes can be reduced, so that the processing capacity of the complete fish assorting or fish processing unit can be gently increased.

**Claims**

1. Unit for fast, selective removal of fishes from a conveyor; consisting of a serie of removal mechanisms installed along a conveyor belt, and by which each mechanism is activated at the right moment; by one or another selection unit; in order to remove the fish from the conveyor belt into a collecting unit, and by which the translation movement of the conveyor belt is utilized to remove the fish; with the characteristic that each removal mechanism comprises a flap (5) which, when activated for removal of the fish, is positioned so that it forms an inclined plane with an angle (α) upwards on the belt (1), and when not activated, leaves a free height (h) between the flap (5) and the belt (1)

2. Unit for fast, selective removal of fishes from a conveyor according conclusion 1 with the characteristic that each removal mechanism comprises a conveyor (7) or inclined plane installed in cross direction above the conveyor (1) starting from the upper edge of the flap (5).

FIG. 1

FIG. 2

FIG. 3

EP 0 487 789 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 051 952 (HAUPTMANN) | 1 | A22C25/00 |
| A | * column 6, line 37 - column 7, line 55 * | 2 | |
| | --- | | |
| A | FR-A-1 216 005 (VOEGELI) | 1,2 | |
| | * page 2, left column, line 46 - right column, last paragraph; figure 7 * | | |
| | --- | | |
| A | DE-A-1 454 209 (NOWAK) | | |
| | --- | | |
| A | DE-A-1 481 318 (WALKER & CO) | | |
| | --- | | |
| A | FR-A-1 137 534 (GREBE) | | |
| | ----- | | |

TECHNICAL FIELDS
SEARCHED (Int. Cl.5 )

A22C

The present search report has been drawn up for all claims

| Place of search | Date of completion of the search | Examiner |
|---|---|---|
| THE HAGUE | 07 AUGUST 1991 | De Lameillieure |

EPO FORM 1503 03.82 (P0401)